(19) Europäisches Patentamt
European Patent Office
Office européen des brevets

(11) **EP 4 403 879 A1**

(12) **EUROPEAN PATENT APPLICATION**
published in accordance with Art. 153(4) EPC

(43) Date of publication:
**24.07.2024 Bulletin 2024/30**

(21) Application number: **21961085.4**

(22) Date of filing: **22.10.2021**

(51) International Patent Classification (IPC):
**G01C 21/30** $^{(2006.01)}$

(52) Cooperative Patent Classification (CPC):
**G01C 21/30**

(86) International application number:
**PCT/CN2021/125857**

(87) International publication number:
**WO 2023/065342 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **CHEN, Chaoyue**
  **Shenzhen, Guangdong 518129 (CN)**
- **HAN, Meizhen**
  **Shenzhen, Guangdong 518129 (CN)**
- **HU, Weilong**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **VEHICLE, VEHICLE POSITIONING METHOD AND APPARATUS, DEVICE, AND COMPUTER-READABLE STORAGE MEDIUM**

(57) This application relates to the field of intelligent driving, and in particular, to a vehicle, a vehicle positioning method and apparatus, a device, and a computer-readable storage medium. In embodiments of this application, a lateral offset is first determined by using a road feature map of a front road image, and then a second location of a vehicle is determined based on the road feature map, a first pose, a local map corresponding to the first pose, and the lateral offset. This can reduce computing resource consumption and time consumption while improving precision of vehicle positioning, thereby synchronously improving reliability and timeliness of the vehicle positioning, and further enhancing driving safety.

FIG. 2

EP 4 403 879 A1

**Description**

**TECHNICAL FIELD**

This application relates to the field of intelligent driving, and in particular, to a vehicle, a vehicle positioning method and apparatus, a device, and a computer-readable storage medium.

**BACKGROUND**

Vehicles highly depend on positioning technologies. Positioning is a prerequisite for other vehicle functions, and positioning precision directly affects vehicle safety. Generally, integrated positioning of a global positioning system (global positioning system, GPS) and an inertial measuring unit (Inertial Measuring Unit, IMU) is used to achieve high-precision positioning of the vehicles. However, when the GPS has poor signal or fails, drifting occurs in the integrated positioning of the GPS and the IMU, and consequently, positioning precision is reduced.

Currently, in an environment where the GPS fails or has poor signal, the IMU is constrained by using laser and visual methods to correct a positioning result. Such methods require to capture and store a feature map of a positioning environment as a visual feature, for example, an ORB (Oriented FAST and Rotated BRIEF) feature or a FAST (Features From Accelerated Segment Test) feature, and perform feature matching in a large range or even in the entire map by using a point matching method such as an iterative closest point (Iterative Closest Point, ICP) algorithm or a Kd tree (Kd-Tree). This leads to a large data volume and high computing complexity, with a serious drain on both computing and time resources. In this case, hardware costs are high while working efficiency is low, and real-time vehicle positioning cannot be performed reliably, which brings a safety risk to unmanned driving or intelligent driving of the vehicles.

**SUMMARY**

To resolve the foregoing technical problem, embodiments of this application provide a vehicle, a vehicle positioning method and apparatus, a device, and a computer-readable storage medium, to reduce computing resource consumption and time consumption while improving precision of vehicle positioning.

A first aspect of this application provides a vehicle positioning method, including:

obtaining a front road image of a vehicle;
obtaining a road feature map based on the front road image;
determining a lateral offset of the vehicle based on the road feature map; and
obtaining a second location of the vehicle based on the lateral offset of the vehicle, a first pose of the vehicle, the road feature map, and a local map corresponding to the first pose.

Because the lateral offset may indicate a lateral road distance of the vehicle, the lateral offset and the first pose are combined, so that a range of image matching may be narrowed, thereby effectively reducing a calculation amount and computing complexity while improving precision of vehicle positioning.

In a possible implementation of the first aspect, the determining a lateral offset of the vehicle based on the road feature map includes: determining the lateral offset of the vehicle based on a lane line feature in the road feature map. The lane line feature is reliable and complete. Therefore, an accurate and reliable lateral offset can be obtained by using the lane line feature as a basis of the lateral offset.

In a possible implementation of the first aspect, the lane line feature in the road feature map includes features of two lane lines in a region of interest ROI in the road feature map, and the two lane lines are located on left and right sides of the first pose. A data volume of the ROI in the road feature map is small, and the lane line feature is complete and reliable. Therefore, accuracy and reliability of the lateral offset of the vehicle can be further improved.

In a possible implementation of the first aspect, the determining the lateral offset of the vehicle based on a lane line feature in the road feature map includes: obtaining the lateral offset of the vehicle based on a lateral pixel offset and a preset pixel ratio, and determining the lateral pixel offset based on a lane line feature in a top view of the ROI in the road feature map, where the lane line feature in the top view of the ROI in the road feature map is obtained by using the features of the two lane lines in the ROI in the road feature map. A manner of obtaining a lateral offset based on a lateral pixel offset and a pixel ratio is easy to implement. Therefore, computing complexity can be further reduced.

In a possible implementation of the first aspect, the lateral pixel offset is a distance between an ROI mapping point of an optical center of a first camera in the top view and a lane central point, the lane central point is a lane central point between the lane lines on the left and right sides of the first pose, and the first camera is a camera that captures the front road image. A location of the optical center of the first camera is easy to obtain, and a calculation amount of coordinate conversion of the location is small. In this way, a calculation amount and computing complexity can be further reduced.

In a possible implementation of the first aspect, the vehicle positioning method further includes: obtaining a second attitude of the vehicle based on the lateral offset of the vehicle, the first pose, the road feature map, and the local map. In this way, an accurate attitude of the vehicle can be obtained in real time.

In a possible implementation of the first aspect, the second location or the second attitude of the vehicle or both are determined based on a plurality of candidate pose points in the local map, and a pose of each candidate pose point is determined based on the lateral offset of the vehicle, the first pose, and the local map. In this way, the vehicle can be accurately positioned by using the candidate pose points selected by the lateral offset. A calculation amount is small, and computing complexity is low. This can effectively reduce computing resource consumption and time consumption.

In a possible implementation of the first aspect, the plurality of candidate pose points are evenly distributed in a same lane direction of the local map by using a corrected location as a center, and the corrected location is obtained based on the lateral offset of the vehicle and based on a lane central point location and a road orientation angle that are corresponding to the first pose and that are in the local map. In this way, the vehicle can be accurately positioned by using the plurality of candidate pose points in the same lane direction. A search range is smaller. This can further reduce a calculation amount and computing complexity while improving precision of vehicle positioning.

In a possible implementation of the first aspect, the second location is location information of one candidate pose point selected by performing feature matching on a projected image and the road feature map; and/or the second attitude is attitude information of the candidate pose point selected by performing feature matching on the projected image and the road feature map; and the projected image is obtained based on a pose of the candidate pose point, internal and external parameters of the first camera, and the local map. Because a degree of matching between the projected image and the road feature map may indicate a degree of proximity between the corresponding candidate pose point and a real vehicle pose, an accurate and reliable vehicle positioning result can be obtained.

In a possible implementation of the first aspect, the vehicle positioning method further includes: obtaining a third pose of the vehicle based on the second location, a first attitude of the vehicle, and sensor positioning data; or obtaining a third pose of the vehicle based on the second location, the second attitude of the vehicle, and sensor positioning data. In this way, a third pose with higher precision and better reliability can be obtained through fusion of a plurality of types of location data, thereby further improving precision and reliability of vehicle positioning.

In a possible implementation of the first aspect, the sensor positioning data includes one or more of the following: GPS information, IMU information, INS vehicle attitude information, and chassis information.

In a possible implementation of the first aspect, the local map is from a vector map. Vector map information is complete and has high precision, so that precision of vehicle positioning can be further improved.

A second aspect of this application provides a vehicle positioning apparatus, including:

> an image obtaining unit, configured to obtain a front road image of a vehicle;
> a feature obtaining unit, configured to obtain a road feature map based on the front road image;
> an offset determining unit, configured to determine a lateral offset of the vehicle based on the road feature map; and
> a location determining unit, configured to obtain a second location of the vehicle based on the lateral offset of the vehicle, a first pose of the vehicle, the road feature map, and a local map corresponding to the first pose.

In a possible implementation of the second aspect, the feature obtaining unit is specifically configured to determine the lateral offset of the vehicle based on a lane line feature in the road feature map.

In a possible implementation of the second aspect, the lane line feature in the road feature map includes features of two lane lines in a region of interest ROI in the road feature map, and the two lane lines are located on left and right sides of the first pose.

In a possible implementation of the second aspect, the feature obtaining unit is specifically configured to obtain the lateral offset of the vehicle based on a lateral pixel offset and a preset pixel ratio, the lateral pixel offset is determined based on a lane line feature in a top view of the ROI in the road feature map, and the lane line feature in the top view of the ROI in the road feature map is obtained by using the features of the two lane lines in the ROI in the road feature map.

In a possible implementation of the second aspect, the lateral pixel offset is a distance between an ROI mapping point of an optical center of a first camera in the top view and a lane central point, the lane central point is a lane central point between the lane lines on the left and right sides of the first pose, and the first camera is a camera that captures the front road image.

In a possible implementation of the second aspect, the vehicle positioning apparatus further includes an attitude determining unit, configured to obtain a second attitude of the vehicle based on the lateral offset of the vehicle, the first pose, the road feature map, and the local map.

In a possible implementation of the second aspect, the second location or the second attitude of the vehicle or both are determined based on a plurality of candidate pose points in the local map, and a pose of each candidate pose point is determined based on the lateral offset of the vehicle, the first pose, and the local map.

In a possible implementation of the second aspect, the plurality of candidate pose points are evenly distributed in a same lane direction of the local map by using a corrected location as a center, and the corrected location is obtained based on the lateral offset of the vehicle and based on a lane central point location and a road orientation angle that are corresponding to the first pose and that are in the local map.

In a possible implementation of the second aspect, the second location is location information of one candidate pose point selected by performing feature matching on a projected image and the road feature map; and/or the second attitude is attitude information of the candidate pose point selected by performing feature matching on the projected image and the road feature map; and the projected image is obtained based on a pose of the candidate pose point, internal and external parameters of the first camera, and the local map.

In a possible implementation of the second aspect, the vehicle positioning apparatus further includes: a fusion unit, configured to: obtain a third pose of the vehicle based on the second location, a first attitude of the vehicle, and sensor positioning data; or obtain a third pose of the vehicle based on the second location, the second attitude of the vehicle, and sensor positioning data.

In a possible implementation of the second aspect, the sensor positioning data includes one or more of the following: GPS information, IMU information, INS vehicle attitude information, and chassis information.

In a possible implementation of the second aspect, the local map is from a vector map.

A third aspect of this application provides a computing device, including a processor and a memory. The memory stores program instructions, and when the program instructions are executed by the processor, the processor is enabled to perform the vehicle positioning method in the first aspect.

A fourth aspect of this application provides a computer-readable storage medium. The computer-readable storage medium stores program instructions, and when the program instructions are executed by a computer, the computer is enabled to perform the vehicle positioning method in the first aspect.

A fifth aspect of this application provides a computer program product, including a computer program. When the computer program is run by a processor, the processor is enabled to perform the vehicle positioning method in the first aspect.

A sixth aspect of this application provides a vehicle, including a first camera configured to capture a front road image, and the vehicle positioning apparatus in the second aspect or the computing device in the third aspect.

In a possible implementation of the sixth aspect, the vehicle further includes one or more of the following: a GPS sensor, an IMU, a vehicle speed sensor, and an acceleration sensor.

In embodiments of this application, the lateral offset is first determined, and then the second location of the vehicle is determined based on the lateral offset. This can effectively narrow a range of complex processing such as image matching and reduce a calculation amount and computing complexity. In this way, in embodiments of this application, computing resource consumption and time costs can be reduced while precision of vehicle positioning is improved. Precision, reliability, and timeliness of vehicle positioning can be synchronously improved in various cases where a GPS fails or has poor signal or otherwise, thereby improving driving safety of the vehicle in various driving modes such as unmanned driving and intelligent driving.

These aspects and another aspect of this application will be clearer and easier to understand in descriptions of the following (a plurality of) embodiments.

## BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are shown. A combination of the features shown in the accompanying drawings is not intended to limit this application. In addition, in this specification, same reference numerals represent same content. Specific accompanying drawings are described as follows:

FIG. 1 is an example diagram of an application scenario according to an embodiment of this application;
FIG. 2 is a schematic flowchart of a vehicle positioning method according to an embodiment of this application;
FIG. 3 is a schematic diagram of a road feature map in an example according to an embodiment of this application;
FIG. 4 is a schematic diagram of a road feature map obtained by separating out a lane line feature in an example according to an embodiment of this application;
FIG. 5 is a schematic diagram of an ROI in a camera coordinate system in an example according to an embodiment of this application;
FIG. 6 is an example diagram of an ROI in a road feature map in an example according to an embodiment of this application;

FIG. 7 is a schematic diagram of a top view of an ROI in a road feature map in an example according to an embodiment of this application;

FIG. 8 is a schematic diagram of a corrected location, a first location, a lateral offset, and a relationship among the corrected location, the first location, and the lateral offset in a reference coordinate system in an example according to an embodiment of this application;

FIG. 9 is a schematic diagram of candidate pose points in an example according to an embodiment of this application;

FIG. 10 is a schematic diagram of a specific implementation process of a vehicle positioning method according to an embodiment of this application;

FIG. 11 is a schematic diagram of a structure of a vehicle positioning apparatus according to an embodiment of this application;

FIG. 12 is a schematic diagram of a structure of a computing device according to an embodiment of this application; and

FIG. 13 is a schematic diagram of a structure of a vehicle in an example according to an embodiment of this application.

## DESCRIPTION OF EMBODIMENTS

In this specification and claims, the terms "first", "second", and the like or similar terms such as a unit A and a unit B are merely used to distinguish between similar objects, and do not indicate a specific order of the objects. It may be understood that specific orders or sequences may be exchanged if allowed, so that embodiments of this application described herein can be implemented in an order other than an order illustrated or described herein.

In the following descriptions, involved reference numerals such as S210 and S220 that indicate steps do not necessarily indicate that the steps are to be performed based on the order, and consecutive steps may be transposed if allowed, or may be performed simultaneously.

The following explain important terms and related terms in embodiments of this application.

World coordinate system: Be also referred to as a measurement coordinate system or an objective coordinate system, and may be used as a reference to describe three-dimensional locations and three-dimensional attitudes of a camera and a to-be-measured object. The world coordinate system is an absolute coordinate system of an objective three-dimensional world. Usually, coordinate values $Pw (Xw, Yw, Zw)$ in three-dimensional coordinate axes indicate a three-dimensional location of an object, and rotation angles (raw, pitch, yaw) of the object relative to the three-dimensional coordinate axes indicate a three-dimensional attitude of the object. In embodiments of this application, the world coordinate system may be used as a reference coordinate system of a global pose.

Camera coordinate system: An optical center of a camera is used as a coordinate origin. A Z axis and an optical axis coincide and point to a front side of the camera. An X axis points to a right side of the camera. A Y axis points to a down side of the camera. Usually, $Pc (Xc, Yc, Zc)$ indicates coordinate values of the camera coordinate system.

External parameters of a camera: May determine a relative location relationship between a camera coordinate system and a world coordinate system. Parameters converted from the world coordinate system to the camera coordinate system may include a rotation matrix R and a translation vector T. Pinhole imaging is used as an example. External parameters of a camera, world coordinates, and camera coordinates satisfy a relational expression (1): $Pc = RPw + T$ (1), where Pw is coordinate values $(Xw, Yw, Zw)$ in a world coordinate system, Pc is coordinate values $(Xc, Yc, Zc)$ in a camera coordinate system, $T = (Tx, Ty, Tz)$ is a translation vector, $R = R (\alpha, \beta, \gamma)$ is a rotation matrix, a rotation angle around a Z axis of the camera coordinate system is $\gamma$, a rotation angle around a Y axis is $\beta$, and a rotation angle around an X axis is $\alpha$. That is, the six parameters $\alpha$, $\beta$, $\gamma$, Tx, Ty, and Tz are the external parameters of the camera.

Internal parameters of a camera: Determine a projection relationship from three-dimensional space to two-dimensional images and be related only to a camera. A small hole imaging model is used as an example. If image distortion is not considered, internal parameters may include scale factors of a camera in two coordinate axes u and v of a pixel coordinate system, principal point coordinates $(x_0, y_0)$ relative to an image coordinate system, and a coordinate axis tilt parameter s. The scale factor in the u axis is a ratio of a physical length dx of each pixel in an x direction of the image coordinate system to a focal length f of the camera. The scale factor in the v axis is a ratio of a physical length dy of the pixel in a y direction of the image coordinate system to the focal length of the camera. If image distortion is considered, internal parameters may include scale factors of a camera in two coordinate axes u and v of a pixel coordinate system, principal point coordinates relative to an imaging plane coordinate system, a coordinate axis tilt parameter, and a distortion parameter. The distortion parameter may include three radial distortion parameters and two tangential distortion parameters of the camera. The internal parameters and external parameters of the camera may be obtained through calibration.

A pixel coordinate system may also be referred to as the pixel coordinate system or an orthographic pixel coordinate system, and is an image coordinate system in a unit of pixel. An upper left vertex of an image plane is used as an origin, a u axis is horizontally rightward, a v axis is vertically downward, and the u axis and the v axis are respectively parallel to an X axis and a Y axis of a camera coordinate system. Usually, p(u,v) indicates coordinate values of the pixel coordinate system. The pixel coordinate system indicates a location of a pixel in an image in a unit of pixel, and an image coordinate system indicates a location of a pixel in an image in a physical unit (for example, a millimeter).

Perspective projection: A perspective projection relationship from a 3D camera coordinate system to a 2D pixel coordinate system. Because origin positions of coordinate systems are not consistent and scale sizes are not consistent, the perspective projection relates to telescopic transformation and translation transformation. A pinhole camera model is used as an example. A perspective projection relationship from a point $(X_C, Y_C, Z_C)$ in a camera coordinate system to (u, v) in a pixel coordinate system satisfies a conversion equation shown in the following Equation (2):

$$Z_c \begin{bmatrix} u \\ v \\ 1 \end{bmatrix} = K \begin{bmatrix} X_c \\ Y_c \\ Z_c \\ 1 \end{bmatrix} \tag{2}$$

(u, v) indicates coordinate values in the pixel coordinate system, (Xc, Yc, Zc) indicates coordinate values in the camera coordinate system, and K is a matrix representation of an internal parameter of a camera.

If image distortion is not considered, Equation (2) may be further represented as the following Equation (3):

$$\begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} \begin{bmatrix} X_C \\ Y_C \\ Y_C \end{bmatrix} \frac{1}{Z_c}, K = \begin{bmatrix} f_x & 0 & u_0 \\ 0 & f_y & v_0 \\ 0 & 0 & 1 \end{bmatrix} \tag{3}$$

$f_x$ is a ratio of a focal length f of the camera to a physical length dx of each pixel in an x direction of an image coordinate system and indicates that the focal length in the x axis direction is described by using the pixel. $f_y$ is the focal length f of the camera to a physical length dy of each pixel in a y direction of the image coordinate system and indicates that the focal length in the y axis direction is described by using the pixel. $(u_0, v_0)$ indicates coordinates of an intersection point (that is, a principal point) that is in the pixel coordinate system and that is between an optical axis of the camera and an image plane, $u_0$ is a ratio of a horizontal coordinate $x_0$ of the principal point in the image coordinate system to dx, and $v_0$ is a ratio of a vertical coordinate $y_0$ of the principal point in the image coordinate system to dy.

Atop view may also be referred to as an aerial view, and may convert coordinate values from an orthographic pixel coordinate system to a pixel coordinate system of the top view through affine transformation.

Affine transformation: The affine transformation is a transformation in which under a three-point collinear condition of a perspective center, an image point, and a target point, a projection plane (that is, a perspective plane) is rotated around a trace line (that is, a perspective axis) by an angle according to a perspective rotation law, to destroy an original projection beam, but a geometric shape of a projection on the projection plane can still maintain unchanged.

A general equation of affine transformation is the following Equation (4):

$$\begin{bmatrix} x' \\ y' \\ w' \end{bmatrix} = \begin{bmatrix} u \\ v \\ w \end{bmatrix} \begin{bmatrix} a_{11} & a_{12} & a_{13} \\ a_{21} & a_{22} & a_{23} \\ a_{31} & a_{32} & a_{33} \end{bmatrix}, M = \begin{bmatrix} a_{11} & a_{12} & a_{13} \\ a_{21} & a_{22} & a_{23} \\ a_{31} & a_{32} & a_{33} \end{bmatrix} \tag{4}$$

(u, v) indicates original coordinates and is represented in a form of an augmented vector, and w = 1. In the affine transformation matrix M, $a_{11}$, $a_{12}$, $a_{21}$, and $a_{22}$ indicate linear transformation (for example, scaling, clipping, and rotation), $a_{31}$ and $a_{32}$ are used for translation, and $a_{13}$ and $a_{23}$ are used to generate perspective transformation.

Usually, transformed coordinates (x, y) satisfy the following Equation (5):

$$x = \frac{x'}{w'}, y = \frac{y'}{w'} \tag{5}$$

If the transformation matrix is known, the following Equation (6) and Equation (7) may be obtained according to Equation (5) and Equation (4) of transformation, and the transformed coordinates may be directly obtained by using the original coordinates according to Equation (6) and Equation (7):

$$x = \frac{x\prime}{w\prime} = \frac{a_{11}u + a_{21}v + a_{31}}{a_{13}u + a_{23}v + a_{33}} \tag{6}$$

$$y = \frac{y\prime}{w\prime} = \frac{a_{12}u + a_{22}v + a_{32}}{a_{13}u + a_{23}v + a_{33}} \tag{7}$$

Herein, values of components in the affine transformation matrix M may be obtained through calculation according to the foregoing equations by using original coordinates and transformed coordinates of three point pairs.

Global pose: May also be referred to as an absolute pose and include a location and an attitude of an object in a reference coordinate system. A vehicle is used as an example. A location of an object may be indicated by using three-dimensional coordinate values (for example, the foregoing coordinate values Pw (Xw, Yw, Zw) in the world coordinate system) in the reference coordinate system. An attitude of the object may be indicated by using a pitch angle (pitch), a yaw angle (yaw) (also referred to as an angle of yaw), and a raw angle (raw) of the vehicle. The raw angle is an angle of rotation around an X axis, the pitch angle is an angle of rotation around a Y axis, and the yaw angle is an angle of rotation around a Z axis. Alternatively, an attitude of the object may be described by using a quaternion. In embodiments of this application, the reference coordinate system of the global pose may be but is not limited to the foregoing world coordinate system (including coordinate values and attitude angles), a geodetic coordinate system, a universal transverse Mercator (Universal Transverse Mercator, UTM) grid system (Grid System) (also referred to as a UTM coordinate system), or the like.

The following first briefly analyzes possible implementations.

As described above, when a GPS fails or has poor positioning effect or otherwise, drifting occurs in integrated positioning of a GPS and an IMU, and consequently, positioning precision is reduced.

In a possible implementation, a positioning system includes a visual positioning apparatus and an inertial navigation apparatus. The inertial navigation apparatus includes an inertial measurement unit. The inertial navigation apparatus obtains status information (including a specific force acceleration and an Euler angle of the inertial measurement unit in a carrier coordinate system) of the inertial measurement unit. The visual positioning apparatus determines a linear acceleration of the inertial measurement unit based on the status information, and then determines location information of an unmanned vehicle based on visual information and the linear acceleration of the inertial measurement unit. This implementation can resolve a problem of low positioning precision of an unmanned vehicle. However, there is an accumulated error in this implementation, and a data volume of visual information is large and computing complexity is high. Therefore, positioning precision in this implementation cannot reach a centimeter level, and computing resource consumption is large.

In a second possible implementation, a visual positioning method includes: pre-obtaining an image of a marker in an environment in which positioning needs to be performed, and establishing a corresponding marker database; after a to-be-recognized image of the marker in the environment in which positioning needs to be performed is captured, performing image matching between the to-be-recognized image and images in the marker database; and obtaining a current location through calculation based on a known geometric feature in a matched image. This implementation can resolve a problem that positioning precision is low when a GPS fails or has poor positioning effect. However, positioning is mainly performed by using images, and a large amount of image matching processing needs to be performed. Therefore, this implementation also has a problem that positioning precision cannot reach a centimeter level and computing resource consumption is excessively large.

In view of this, embodiments of this application provide a vehicle, a vehicle positioning method and apparatus, a device, and a computer-readable storage medium. A lateral offset is first determined based on a road feature map of a front road image, and then a second location of a vehicle is obtained based on the lateral offset, a first pose of the vehicle, and a local map. Because the lateral offset may indicate a lateral road distance of the vehicle, the lateral offset and the first pose are combined, so that a search range of the local map may be narrowed, that is, a range of image matching is narrowed. This can effectively reduce a calculation amount and computing complexity while improving precision of vehicle positioning. In this way, in embodiments of this application, precision, reliability, and timeliness of vehicle positioning can be simultaneously improved in various cases where a GPS fails or has poor signal or otherwise.

Embodiments of this application may be applicable to various scenarios in which precise positioning is required. In particular, embodiments of this application are particularly applicable to positioning of a transportation means such as a vehicle, a ship, an aircraft, and an uncrewed aerial vehicle, for example, to real-time precise positioning in a driving process of a vehicle, positioning of an unmanned guided vehicle in a logistics scenario, and real-time precise positioning of an uncrewed aerial vehicle in an outdoor environment. In addition, embodiments of this application may be applicable to various environments such as indoor, outdoor, road, and field environments.

The "vehicle" in embodiments of this application may be any type of transportation means. For example, the "vehicle" herein may be but is not limited to a private vehicle, a commercial vehicle, a bus, a passenger vehicle, a high-speed railway, a subway, an unmanned vehicle, an uncrewed aerial vehicle, a logistics transportation vehicle, an unmanned transportation vehicle, or the like. A power type of the "vehicle" may be fuel driving, pure electric driving, hydrogen fuel cell driving, hybrid electric driving, or the like. In addition, the "vehicle" herein may be a man-driven vehicle, an autonomous vehicle, an unmanned vehicle, or another type of vehicle. A person skilled in the art may understand that any transportation means that needs to be positioned in real time may be considered as the "vehicle" in embodiments of this application.

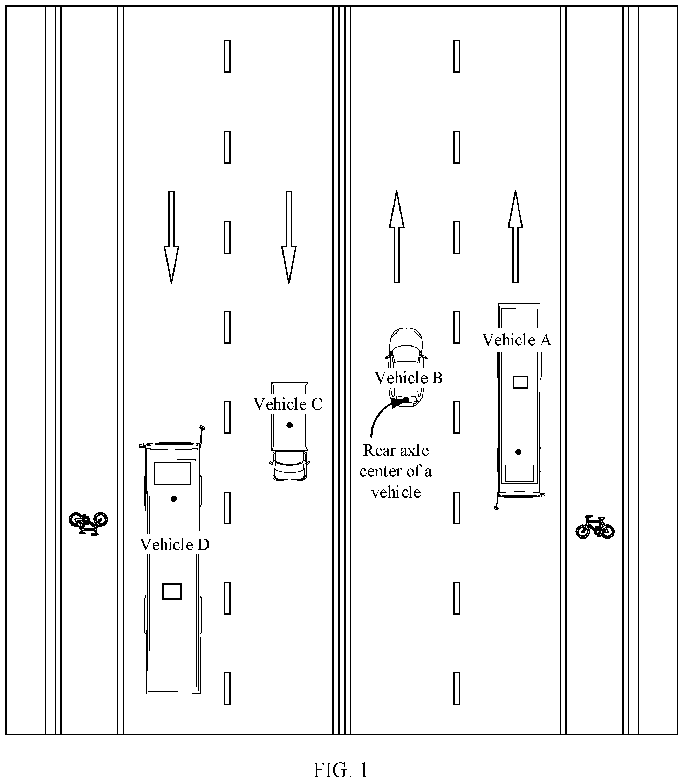

FIG. 1 is a schematic diagram of an example application scenario according to an embodiment of this application. In the scenario of FIG. 1, a vehicle A, a vehicle B, a vehicle C, and a vehicle D on a road may all position respective locations in real time by using solutions in embodiments of this application. For example, in a scenario in which a GPS fails or has poor signal, in a scenario of low precision of a vehicle sensor, a tunnel scenario, an underground garage, or in various other scenarios, real-time, accurate, and reliable positioning of a vehicle can be implemented by using embodiments of this application.

For example, refer to FIG. 1. Positioning locations of the vehicles may be indicated by locations of rear axle centers (black solid dots in FIG. 1) of the vehicles.

The following describes in detail specific implementations of embodiments of this application.

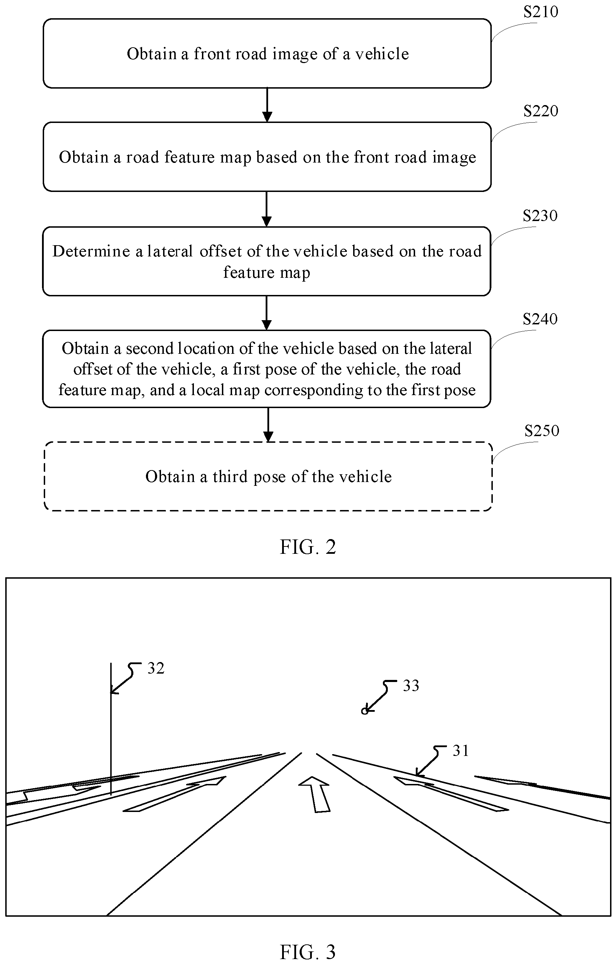

FIG. 2 is a schematic flowchart of a vehicle positioning method according to an embodiment of this application. Refer to FIG. 2. The vehicle positioning method provided in this embodiment of this application may include the following steps.

Step S210: Obtain a front road image of a vehicle.

The front road image may be captured by using a first camera loaded on the vehicle, and the front road image may include lane lines and a marker of a front road of the vehicle. Herein, the marker may include but is not limited to all traffic signs and road markings such as traffic lights, underground parking garage columns, walls, toll booths, road gates, anti-collision strips, obstacles, storage locations, storage location lines, no-parking areas, pedestrian crossroads, deceleration belts, slow down, stop, yield lines, and yield, road sign plates, utility poles, road edges, trees, shrubs, median strips, guardrails, and the like. In addition, the front road image may further include a lane midline, a guide line, a guide arrow, and the like of the road.

The front road image is used to determine a second location and/or a second attitude of the vehicle based on a first pose of the vehicle, and a second pose formed by the second location and the second attitude is a next pose of the first pose. In other words, the front road image is a front road image captured in a time period from the vehicle reaching the first pose to the vehicle not reaching or just reaching the second pose. For example, capture time of the front road image may be the following time: a moment at which the vehicle reaches the first pose, a moment at which the vehicle reaches the second pose, or a time period from the vehicle reaching the first pose to the vehicle not reaching the second pose.

The front road image may be but is not limited to a time of flight (Time of Flight, TOF) image, a red green blue (Red Green Blue, RGB) image, or another type of image. The first camera may be but is not limited to a TOF camera, an RGB camera, or the like. A deployment manner, an installation location, a specific type and a deployment quantity of the first camera, and a specific type and the like of the front road image are not limited in embodiments of this application.

Step S220: Obtain a road feature map based on the front road image.

In some embodiments, the road feature map of the front road image may be obtained by performing one or more operations such as semantic feature extraction, fit postprocessing (for example, fitting an incomplete lane line into a long straight line), and feature skeletonization (for example, lane line feature skeletonization, utility pole feature skeletonization, guide line contouring, and sign plate contouring) on the front road image. A specific implementation of obtaining the road feature map is not limited in embodiments of this application.

In some embodiments, the road feature map may be a grayscale map, and a range of a pixel value of the road feature map is [0, 255]. During specific application, different types of road features may be indicated by using pixel values. For example, a pixel value of a lane line feature may be preset to 255, a pixel value of a utility pole feature may be set to 135, a pixel value of a guide arrow feature may be set to 95, and a pixel value of a sign plate feature may be set to 45. In this way, different types of road features in the road feature map may be distinguished by using pixel values, to efficiently and accurately extract a required feature from the road feature map. For example, if the lane line feature in the road feature map needs to be extracted, only a pixel whose pixel value is 255 in the road feature map needs to be extracted. If a pixel value of a pixel in the road feature map is 135, it indicates that the pixel is a feature point of a utility pole.

In some embodiments, the road feature map may include a lane line feature and a marker feature of a road in the front road image. FIG. 3 is an example diagram of a road feature map. In an example in FIG. 3, the road feature map may include a lane line feature 31, a utility pole feature 32, a traffic light feature 33, and the like. It can be learned from FIG. 3 that the road feature map includes features of two lane lines located on left and right sides of the first pose.

Step S230: Determine a lateral offset of the vehicle based on the road feature map.

In some embodiments, the lateral offset of the vehicle may indicate a road lateral distance from the vehicle (for example, a rear axle center of the vehicle or an optical center of the first camera on the vehicle) to the lane midline. The lateral offset may be but is not limited to an actual lateral offset or a lateral pixel offset. The actual lateral offset is a lateral offset in a reference coordinate system. The lateral pixel offset is a lateral offset in a top view of the road feature map.

In some embodiments, the lateral offset of the vehicle may be determined based on the lane line feature in the road feature map. The lane line feature is complete and reliable. Therefore, a lateral offset with better accuracy and reliability can be obtained by using the lane line feature as a basis of the lateral offset. During specific application, another road feature, for example, a lane midline, a guide line, or a guide arrow, may alternatively be used as a basis for determining the lateral offset.

In some embodiments, the lane line feature in the road feature map may include features of two lane lines in an ROI in the road feature map, and the two lane lines are located on the left and right sides of the first pose. In other words, the lateral offset of the vehicle may be determined based on the features of the two lane lines in the ROI in the road feature map. Because a data volume of the ROI in the road feature map is smaller, and the features of the two lane lines on the left and right sides of the first pose are reliable and complete, the lateral offset is obtained by using the features of the two lane lines in the ROI in the road feature map. This can further reduce computing complexity, computing resource consumption, and time consumption while improving lateral offset accuracy. During specific application, the lateral offset may alternatively be obtained by using another feature in the road feature map or a lane line feature of another region. A feature used for determining the lateral offset of the vehicle is not limited in embodiments of this application.

In some embodiments, the lateral offset of the vehicle may be obtained based on the lateral pixel offset and a preset pixel ratio. The lateral pixel offset is determined based on a lane line feature in a top view of the ROI in the road feature map, and the lane line feature in the top view of the ROI in the road feature map is obtained by using the features of the two lane lines in the ROI in the road feature map. Because a data volume of the ROI in the road feature map is smaller, and the features of the two lane lines included in the road feature map are reliable and complete, the top view of the ROI in the road feature map is equivalent to an aerial feature view of the front road of the vehicle, and a manner of obtaining the lateral offset based on the lateral pixel offset and the pixel ratio is simple and easy to implement, the lateral offset of the vehicle is obtained based on the lateral pixel offset. This can further reduce computing complexity, computing resource consumption, and time consumption while improving lateral offset accuracy.

In some embodiments, the lateral pixel offset may be a distance between an ROI mapping point of the optical center of the first camera in the top view and a lane central point, and the lane central point is a lane central point between the lane lines on the left and right sides of the first pose. Because the optical center of the first camera is a coordinate origin of a camera coordinate system and a pixel coordinate system of the first camera, and an ROI mapping point location of the optical center of the first camera is easy to obtain, the lateral pixel offset is obtained by using the ROI mapping point of the optical center of the first camera. This can further reduce computing complexity.

During specific application, the lateral pixel offset may alternatively be obtained by using an ROI mapping point location of another rigid location point (for example, the rear axle center of the vehicle) on the vehicle. A specific manner of obtaining the lateral pixel offset is not limited in embodiments of this application.

In some embodiments, an example specific implementation process of determining the lateral offset may include the following step (1) to step (4).

(1) Determine the ROI in the road feature map based on a preset ROI size parameter, where the ROI in the road feature map includes the features of the lane lines on the left and right sides of the first pose.
(2) Determine an affine transformation matrix of the first camera based on endpoint locations of the ROI in the road feature map and the preset pixel ratio, and obtain, based on the affine transformation matrix, the top view of the ROI in the road feature map through affine transformation of the first camera.
(3) Determine a lane central point location and the ROI mapping point location of the optical center of the first camera in the top view of the ROI in the road feature map, and use a distance between the lane central point location and the ROI mapping point location as the lateral pixel offset.
(4) Use a product of the lateral pixel offset and the pixel ratio as an actual lateral offset, where the actual lateral offset is a final lateral offset.

In the foregoing example implementation, the lateral offset of the vehicle may be obtained through perspective projection and affine transformation of the first camera based on the lane line feature. A calculation amount is small, and computing complexity is low. In addition, this can improve accuracy of the lateral offset, and further reduce computing resource consumption and time consumption while improving precision of vehicle positioning.

Step S240: Obtain the second location of the vehicle based on the lateral offset of the vehicle, the first pose of the vehicle, the road feature map, and a local map corresponding to the first pose.

The first pose indicates an initial pose of the vehicle or a pose at a previous moment. The first pose may include a first location and a first attitude. The first location is an initial location of the vehicle or a location at a previous moment, and the first attitude is an initial attitude of the vehicle or an attitude at a previous moment.

The second pose is a next pose of the first pose, and the second pose may also be referred to as a visual positioning pose of the first pose. The second pose may include a second location and the second attitude. If a location of the vehicle does not change but only an attitude changes, the second location is equivalent to the first location. If the location of the vehicle changes, the second location may be obtained by performing processing in step S210 to step S240 on the first pose. If the attitude of the vehicle does not change or a change of the attitude of the vehicle is not concerned, the second attitude may be equivalent to the first attitude. If the attitude of the vehicle needs to be updated and the attitude of the vehicle changes, the second attitude may alternatively be obtained by performing processing in step S210 to step S240 on the first pose.

A third pose is a pose (which may also be referred to as a fusion positioning pose) obtained by performing processing in step S210 to step S250 on the first pose. In other words, the third pose may be obtained by performing processing in step S250 on the second pose.

Both the second pose and the third pose may be used as a positioning pose of the vehicle or a pose at a current moment. During actual application, the second pose and/or the third pose may be selected as a final pose of the vehicle or the pose at the current moment based on a requirement. Herein, the first pose, the second pose, and the following third pose may be the global pose described above.

In some embodiments, step S240 may further include: obtaining the second attitude of the vehicle based on the lateral offset, the first location, the first attitude, the road feature map, and the local map. During specific application, the second pose may be obtained synchronously with the second location, or the second pose and the second location may be obtained in sequence, but an obtaining sequence is not limited.

In some embodiments, embodiments of this application may further include: obtaining the local map corresponding to the first pose of the vehicle. During actual application, data of the local map may be obtained from a map in a cloud, or may be extracted from a map stored locally, and may be obtained before the positioning method in embodiments of this application starts, or may be obtained in real time in an execution process (for example, in or before step S240) of embodiments of this application.

The local map is a part corresponding to a region around the first pose in the map. In some embodiments, the local map may be a preset region centered on a corresponding location of the first pose in the map, and the preset region may be a circular region, a rectangular region, a triangular region, or a region of another user-defined shape. The circular region is used as an example. The local map may be a circular region in which the corresponding location of the first pose is used as a circle center and a preset length is used as a radius in the map. The preset length may be flexibly set or determined based on a vehicle speed. For example, the preset length may be 30 meters to 50 meters by default.

Because data in a vector map is accurate and complete, to improve precision of vehicle positioning, the local map in embodiments of this application may be from the vector map. In some embodiments, the vector map may be a high-definition vector map or a high-precision vector map. During specific application, the vector map may be from a cloud or built in a storage device of the vehicle.

In some embodiments, information recorded in the local map includes but is not limited to location information of each point in each lane, location information of a lane central point, road orientation angle information, marker information, and the like. A road feature (for example, a marker, a lane line, or the like) in the local map may be indicated by using a vector line, a curve, or a straight line, and different types of road features may be distinguished by using pixel values. Road orientation angle information of each lane in the local map may be associated with location information, and road orientation angles corresponding to different locations of a same lane may be the same or may be different. In addition, the local map may also record information of various road signs such as a guide arrow and a guide line. A type of the local map, a visual representation manner, specific recorded content, and the like are not limited in embodiments of this application.

In some embodiments, the second location or the second attitude or both may be determined based on a plurality of candidate pose points in the local map, and a pose of each candidate pose is determined based on the lateral offset, the first pose, and the local map. In this way, the vehicle can be accurately positioned by using the candidate pose points selected based on the lateral offset, and there is no need to perform large-scale global image matching on the region around the first pose. A calculation amount is small, and computing complexity is low. This can effectively reduce computing resource consumption and time consumption while improving precision of vehicle positioning.

In some embodiments, the plurality of candidate pose points are evenly distributed in a same lane direction of the local map by using a corrected location as a center, and the corrected location is obtained based on the lateral offset and based on a lane central point location and a road orientation angle that are corresponding to the first pose and that are in the local map. In this way, the vehicle can be accurately positioned by using the plurality of candidate pose points in the same lane direction. A search range is smaller, and an image matching range is further narrowed. This can further reduce computing resource consumption and time consumption while improving precision of vehicle positioning.

In some embodiments, the second location may be location information of one candidate pose point selected by performing feature matching on a projected image and the road feature map; and/or the second attitude may be attitude information of the candidate pose point selected by performing feature matching on the projected image and the road feature map; and the projected image is obtained based on a pose of the candidate pose point, internal and external parameters of the first camera, and the local map. Because a degree of matching between the projected image and the road feature map may indicate a degree of proximity between the corresponding candidate pose point and a real vehicle pose, an accurate and reliable vehicle positioning result can be obtained by performing feature matching between the projected image and the road feature map.

In some examples, the candidate pose point selected by performing feature matching on the projected image and the road feature map may be any candidate pose point with a matching cost of the projected image and the road feature map less than a preset threshold in the plurality of candidate pose points, or a candidate pose point with a smallest matching cost of the projected image and the road feature map. The smallest matching cost of the projected image and the road feature map indicates a highest degree of matching between the projected image and the road feature map, and also indicates that the corresponding candidate pose point is closest to the real pose of the vehicle. Therefore, a pose of the candidate pose point with the matching cost less than the preset threshold or with the smallest matching cost is closer to the real pose of the vehicle. In this way, a more accurate and reliable vehicle positioning result can be obtained.

In some embodiments, the vehicle positioning method provided in embodiments of this application may further include: step S250 of obtaining the third pose of the vehicle based on the second location, the first attitude, and sensor positioning data; or obtaining the third pose of the vehicle based on the second location, the second attitude, and sensor positioning data. Herein, the sensor positioning data may include one or more of the following: GPS information, IMU information, inertial navigation system (Inertial Navigation System, INS) vehicle attitude information, and chassis information. In this way, the second attitude and real-time positioning information of another sensor may be fused to obtain a third pose with higher precision and better reliability, to compensate for impact of an external environment condition such as poor performance of the first camera and poor illumination on precision of the second pose, and further improve precision and reliability of vehicle positioning.

In some embodiments, an extended Kalman filter (Extended Kalman-Filter, EKF) may be used to perform multi-sensor information fusion, to obtain the third pose of the vehicle through calculation, and may, for example, perform fusion on the GPS information, the IMU information, the INS vehicle attitude information, the chassis information, and the second pose by using a value of a covariance of the GPS information, the IMU information, the INS vehicle attitude information, the chassis information, and the second pose as a weight of information validity, to obtain the third pose of the vehicle. Herein, a specific algorithm of the fusion calculation is not limited in embodiments of this application.

In some embodiments, an example implementation procedure of step S230 may include the following step a1 to step a5.

Step a1: Separate out the lane line feature.

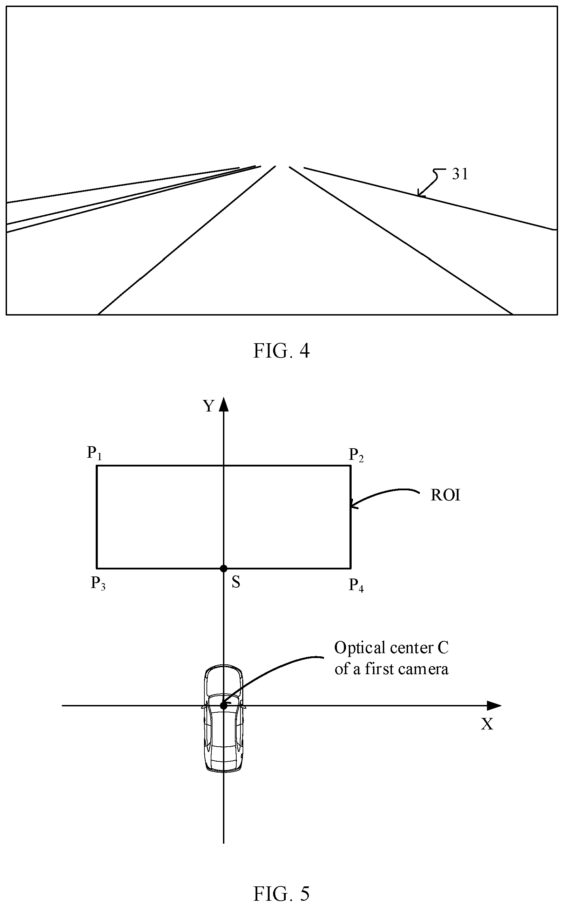

In some embodiments, different markers in the road feature map may be classified by using pixel values. It is assumed that a pixel value of the lane line feature is agreed to be m, and pixels whose pixel value in the road feature map is m may be extracted to form a road feature map that includes only the lane line feature. FIG. 4 is a road feature map obtained by separating out the lane line feature in FIG. 3.

This step is an optional step. The step of separating out the lane line feature may be applied or omitted based on an actual application requirement. Road features are separated out in advance. This can reduce a data volume of a subsequent processing process, reduce computing complexity, and filter out unnecessary feature data. If another feature such as the lane midline is offset laterally, the another feature such as the lane midline may be separated out in a similar manner.

Step a2: Obtain the ROI in the road feature map.

An ROI may be selected as a fixed field of view region with high detection effect precision and accuracy. During actual application, a near object has a larger representation form in an image, and is more likely to be detected. A far object has a smaller representation form in the image, and is less likely to be detected. In addition, an object on an edge of a field of view is likely to be an incomplete object in the image, and a detection error probability is high. In a region that is close and is not on the edge of the field of view, image data is complete and accurate, and detection accuracy is high. Therefore, a partial field of view region that is close to the camera and that is not on an edge is usually agreed as an ROI. During specific application, the ROI may be preset as an actual size range of a fixed field of view region.

In some embodiments, a region of interest (region of interest, ROI) may be selected in the camera coordinate system of the first camera, and a size parameter of the ROI is preset. The size parameter may include but is not limited to locations of ROI endpoints in the camera coordinate system, an ROI length, and an ROI width. A rectangular ROI is used as an example. A size parameter of the ROI may include but is not limited to locations of four ROI endpoints (for example, coordinate values of the four endpoints in the camera coordinate system of the first camera), an ROI length, and an ROI width.

In this step, ROI endpoints in the road feature map may be obtained by converting the ROI endpoints into the pixel coordinate system of the first camera through perspective projection of the first camera. A rectangular region defined by these endpoints is the ROI in the road feature map.

FIG. 5 is a schematic diagram of an ROI in a camera coordinate system of a first camera. In an example in FIG. 5, in a camera coordinate system XCY in which an actual location C of the first camera (that is, a location of the optical center of the first camera in the reference coordinate system) is used as a coordinate origin, a rectangular region enclosed by four points $P_1$, $P_2$, $P_3$, and $P_4$ is selected on the ground as an ROI. A size parameter of the ROI may include coordinate values $P_1(x_{P1}, y_{P1}, z_{P1})$, $P_2(x_{P2}, y_{P2}, z_{p2})$, $P_3(x_{P3}, y_{P3}, z_{P3})$, and $P_4(x_{P4}, y_{P4}, z_{P4})$ of the four points in the camera coordinate system, an ROI length m (that is, an actual distance from $P_1$ to $P_2$, in meters) and an ROI width n (that is, an actual distance from $P_1$ to $P_3$, in meters).

In some embodiments, when the ROI in the road feature map is obtained, the ROI mapping point location of the optical center of the first camera may be further determined. Specifically, an ROI mapping point location of the optical center of the first camera in the camera coordinate system may be determined based on the locations of the ROI endpoints in the camera coordinate system, and an ROI mapping point location of the optical center of the first camera in the pixel coordinate system may be obtained through perspective projection of the first camera based on the ROI mapping point location of the optical center of the first camera in the camera coordinate system.

Refer to an example in FIG. 5. A perpendicular line is made from the actual location C of the first camera to the ROI, and an intersection point of the perpendicular line (that is, a Y axis of the camera coordinate system of the first camera) and a side edge of the ROI close to the camera is an ROI mapping point S of the optical center of the first camera. Locations of the ROI endpoints in the camera coordinate system are known, and a location $(S_X, S_Y, S_Z)$ of the ROI mapping point S of the optical center of the first camera may be determined, that is, $S_Y = 0$, $S_X = 0$, and $S_Z = z_{P3} = z_{P4}$.

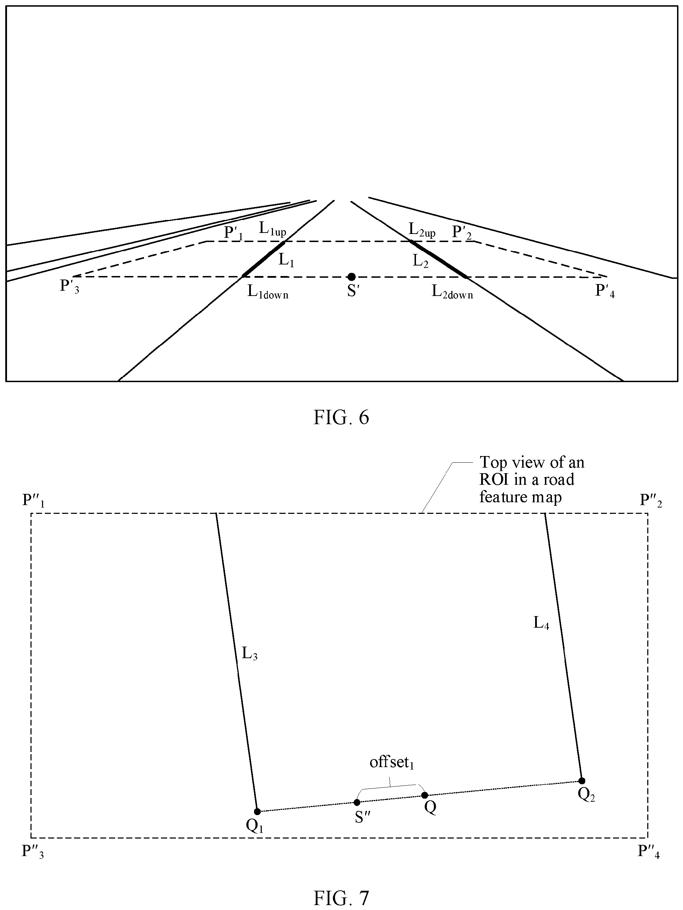

The coordinate values $P_1(x_{P1}, y_{P1}, z_{P1})$, $P_2(x_{P2}, y_{P2}, z_{P2})$, $P_3(x_{P3}, y_{P3}, z_{P3})$, and $P_4(z_{P4}, y_{P4}, z_{P4})$ of the four points in the camera coordinate system and the location $(S_X, S_Y, S_Z)$ of the ROI mapping point S are known, and locations $P_1'(u_{P1}, v_{P1})$, $P_2'(u_{P2}, v_{P2})$, $P_3'(u_{P3}, v_{P3})$, and $P_4'(u_{P4}, v_{P4})$ of the ROI endpoints $P_1$, $P_2$, $P_3$, and $P_4$ in the pixel coordinate system of the first camera, and a location $S'(u_S, v_S)$ of the ROI mapping point S in the pixel coordinate system of the first camera may be obtained through perspective projection of Equation (2) and Equation (3). In this way, an ROI in the road feature map is obtained. FIG. 6 is an example diagram of an ROI in a road feature map. In FIG. 6, a dashed box indicates a boundary line of the ROI, and solid lines indicate lane lines.

Step a3: Determine endpoint locations of two left and right adjacent lane lines in the ROI in the road feature map.

In some embodiments, the two left and right adjacent lane lines $L_1$ and $L_2$ may be detected in the ROI in the road feature map by using a Hoff straight line detection method or the like, and endpoint locations $L_{1up}(x_{l1}, y_{l1})$ and $L_{1down}(x_{l2}, y_{l2})$ of the lane line $L_1$ and endpoint locations $L_{2up}(x_{l3}, y_{l3})$ and $L_{2down}(x_{l4}, y_{l4})$ of the lane line $L_2$ are determined. In this way, the two left and right adjacent lane lines in the ROI may be selected based on distribution of the lane lines in the ROI in the road feature map, as a basis for determining the lateral offset, to obtain a more reliable lateral offset. FIG. 6 shows two left and right lane lines (bold black lines in FIG. 6) adjacent to a vehicle in the ROI in the road feature map and endpoints of the two lane lines.

Step a4: Obtain the lane line feature in the top view of the ROI in the road feature map and the ROI mapping point location of the optical center of the first camera through affine transformation.

In some implementations, an example implementation process of this step may include the following substep (1) and substep (2).

(1) Construct a top view corresponding to the first camera, and determine an affine transformation matrix M between the ROI in the road feature map and the top view of the ROI in the road feature map.

Specifically, a top view with a pixel ratio of k (a unit is a pixel per meter, that is, a quantity of pixels per meter) may be pre-constructed, and has a width of $B_w$ and a height of $B_h$. Based on an ROI length m and an ROI width n in the camera coordinate system of the first camera, $B_w$ and $B_h$ may be obtained according to Equation (8):

$$\begin{cases} B_w = \dfrac{m}{k} \\ B_h = \dfrac{n}{k} \end{cases} \tag{8}$$

Specifically, the ROI endpoints $P_1'(u_{P1}, v_{P1})$, $P_2'(u_{P2}, v_{P2})$, $P_3'(u_{P3}, v_{P3})$, and $P_4'(u_{P4}, v_{P4})$ are known. Endpoint locations $P_1''(0,0)$, $P_2''((B_w - 1),0)$, $P_3''((B_w - 1), (B_h - 1))$, and $P_4''(0, (B_h - 1))$ in the pixel coordinate system of the top view may be obtained based on $B_w$ and $B_h$. In this way, the affine transformation matrix M between the ROI in the road feature map and the top view of the ROI in the road feature map may be obtained according to the foregoing Equations (6) and (7) of affine transformation.

(2) Obtain lane lines $L_3$ and $L_4$, and an ROI mapping point S" of the top view of the ROI in the road feature map through affine transformation.

First, the lane lines $L_1$ and $L_2$ in the ROI in the road feature map are converted into the pixel coordinate system of the top view through affine transformation, to obtain the corresponding lane lines $L_3$ and $L_4$ in the top view of the ROI in the road feature map. Specifically, endpoint locations $L_{3up}(x_{l5}, y_{l5})$, $L_{3down}(x_{l6}, y_{l6})$, $L_{4up}(x_{l7}, y_{l7})$, and $L_{2down}(x_{l8}, y_{l8})$ corresponding to the lane lines $L_3$ and $L_4$ in the top view may be obtained by substituting the endpoints $L_{1up}(x_{l1}, y_{l1})$, $L_{1down}(x_{l2}, y_{l2})$, $L_{2up}(x_{l3}, y_{l3})$, and $L_{2down}(x_{l4}, y_{l4})$ of the lane lines $L_1$ and $L_2$ into Equations (6) and (7) of affine transformation.

Then, based on the endpoint locations of the lane line $L_3$ and $L_4$, a lane line $L_3$ expression (9) and a lane line $L_4$ expression (10) may be obtained:

$$L_3 = k_{L_3} * x + b_{L_3} \tag{9}$$

$$L_4 = k_{L_4} * x + b_{L_4} \tag{10}$$

$k_{L3}$ indicates a slope of the lane line $L_3$, $b_{L3}$ indicates a y axis intercept of the lane line $L_3$, $k_{L4}$ indicates a slope of the lane line $L_4$, and $b_{L4}$ indicates a y axis intercept of the lane line $L_4$.

In addition, an ROI mapping point location S'($u_S$, $v_S$) of the optical center of the first camera in the ROI in the road feature map is substituted into Equations (6) and (7) of affine transformation, to obtain an ROI mapping point location S"($x_1$, $y_1$) of the optical center of the first camera in the top view of the ROI in the road feature map. FIG. 7 is an example diagram of a top view of an ROI in a road feature map. FIG. 7 also shows the lane lines $L_3$ and $L_4$, and the ROI mapping point S" in the top view of the ROI in the road feature map. A dashed box indicates the top view of the ROI in the road feature map, solid lines in the dashed box indicate the lane lines, and a dashed line between the two solid lines indicates a lane cross-sectional line.

Step a5: Calculate the lateral offset.

Specifically, a location $Q(x_2, y_2)$ of the lane central point in the top view of the ROI in the road feature map may be obtained based on the lane line $L_3$ expression (9) and the lane line $L_4$ expression (10), the lateral pixel offset is obtained based on the location $Q(x_2, y_2)$ of the lane central point and the ROI mapping point location S"($x_1$, $y_1$), and then an actual lateral offset is obtained based on the lateral pixel offset and the preset pixel ratio.

Refer to an example in FIG. 7. In the pixel coordinate system of the top view, a perpendicular line is made to the lane line $L_3$ or the lane line $L_4$ through $S''(x_1, y_1)$, and an intersection point $Q_1$ of the perpendicular line and the lane line $L_3$ and an intersection point $Q_2$ of the perpendicular line and the lane line $L_4$ are two endpoints of a lane cross-sectional line. A midpoint of the lane cross-sectional line $Q_1Q_2$, that is, a middle point between the intersection point $Q_1$ and the intersection point $Q_2$, is the location $Q(x_2, y_2)$ of the lane central point.

Coordinates $Q_1(l_{x1}, l_{y1})$ and $Q_2(l_{x2}, l_{y2})$ of the two endpoints of the lane cross-sectional line may be determined based on the lane line $L_3$ expression (9) and the lane line $L_4$ expression (10) in the top view of the ROI in the road feature map, and the ROI mapping point $S''(x_1, y_1)$. Then, the location $Q(x_2, y_2)$ of the lane central point may be obtained according to Equation (11):

$$\begin{cases} x_2 = \frac{(l_{x1}+l_{x1})}{2} \\ y_2 = \frac{(l_{y1}+l_{y1})}{2} \end{cases} \tag{11}$$

The lateral pixel offset is a road lateral offset in the pixel coordinate system of the top view of the ROI in the road feature map. It can be learned from FIG. 7 that a distance between the ROI mapping point $S''(x_1, y_1)$ and the lane central point $Q(x_2, y_2)$ in the pixel coordinate system of the top view of the ROI in the road feature map is the lateral pixel offset. In other words, a lateral pixel offset $offset_1$ may be obtained according to Equation (12):

$$offset_1 = \sqrt{(x_2 - x_1)^2 + (y_2 - y_1)^2} \tag{12}$$

In some embodiments, the actual lateral offset is a road lateral offset in the reference coordinate system.

Specifically, an actual lateral offset $offset_2$ may be obtained according to Equation (13):

$$offset_2 = k * offset_1 \tag{13}$$

$offset_2$ indicates the actual lateral offset, and $k$ indicates the preset pixel ratio.

In some embodiments, an example implementation procedure of step S240 may include the following step b1 to step b3.

Step b1: Correct the first location based on the lateral offset, to obtain a corrected location corresponding to the first pose.

In some embodiments, a corrected location $H_{start}(H_{x0}, H_{y0}, H_{z0})$ may be obtained according to Equation (14):

$$\begin{cases} H_{x0} = C_x + offset_2 * \sin(yaw_l) \\ H_{y0} = C_y + offset_2 * (-\cos(yaw_l)) \\ H_z = C_z \end{cases} \tag{14}$$

$C_{start}(C_x, C_y, C_z)$ indicates a location of a lane central point $C_{start}$ corresponding to a first location $E_{start}(E_x, E_y, E_z)$ in the local map, $offset_2$ indicates the actual lateral offset, and $yaw_l$ indicates a road orientation angle corresponding to the first location $E_{start}(E_x, E_y, E_z)$ in the local map. Usually, $C_{start}(C_x, C_y, C_z)$ and $yaw_l$ are recorded in the local map, and may be directly read from the local map based on the first location $E_{start}(E_x, E_y, E_z)$.

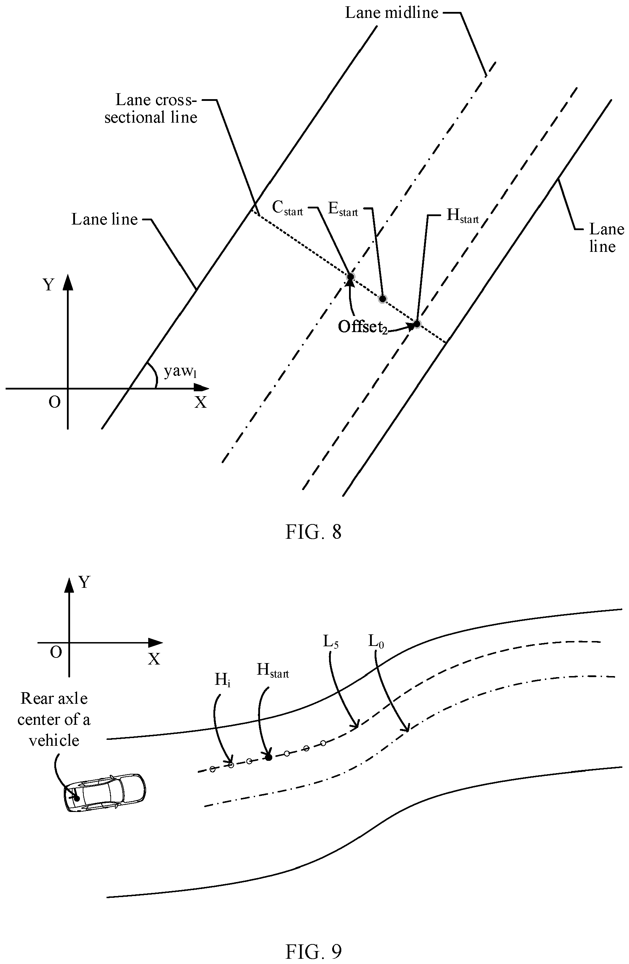

FIG. 8 is a schematic diagram of a corrected location, a first location, and a lateral offset in a reference coordinate system. In FIG. 8, coordinate axes XOY are an XY plane of the reference coordinate system, O is a coordinate origin of the reference coordinate system, $E_{start}$ indicates the first location, $C_{start}$ indicates the lane central point corresponding to the first location $E_{start}$ in the local map, and $offset_2$ indicates the actual lateral offset. It can be learned from FIG. 8 that a lateral offset component of each coordinate axis may be obtained by decomposing the lateral offset to the reference coordinate system based on the road orientation angle $yaw_l$. Coordinate values of the corrected location $H_{start}$ may be obtained by adding the lateral offset component of each coordinate axis to a corresponding coordinate value of the lane central point.

Step b2: Determine candidate pose points.

In an implementation, the candidate pose points are selected in a lane direction of the local map by using the corrected location $H_{start}(H_{x0}, H_{y0}, H_{z0})$ as a center, and a pose of each candidate pose point may be determined based on the corrected location $H_{start}(H_{x0}, H_{y0}, H_{z0})$ and road orientation angle information in the local map.

Specifically, the corrected location $H_{start}(H_{x0}, H_{y0}, H_{z0})$, a preset search range, and a preset search step are known, and based on road orientation data $yaw_i$ in the local map, the corrected location $H_{start}(H_{x0}, H_{y0}, H_{z0})$ is used as a location of a 0th candidate pose point $H_{z0}$. A quantity (2n+1) of the candidate pose points and location information $(H_{xi}, H_{yi}, H_{zi})$ of each candidate pose point may be determined according to Equation (15) to Equation (18):

$$\begin{cases} H_{xi} = H_{x0} + step * \cos(yaw_i), i = 1, \ldots, n-1, n \\ H_{yi} = H_{y0} + step * \sin(yaw_i), i = 1, \ldots, n-1, n \end{cases} \tag{15}$$

$$\begin{cases} H_{xi} = H_{x0} + (-step) * \cos(yaw_i), i = -n, -n+1, \ldots, -1 \\ H_{yi} = H_{y0} + (-step) * \sin(yaw_i), i = -n, -n+1, \ldots, -1 \end{cases} \tag{16}$$

$$H_{zi} = H_{z0}, i = -n, -n+1, \ldots, -1, 0, 1, \ldots, n-1, n \tag{17}$$

$$n = \frac{scope}{step} \tag{18}$$

scope indicates the preset search range, step indicates the preset search step, $H_i(H_{xi}, H_{yi}, H_{zi})$ indicates a location of the $i$th candidate pose point, and $yaw_i(i = -n, -n+1, \ldots, -1, 0, 1, \ldots, n-1, n)$ indicates a road orientation angle corresponding to the $i$th candidate pose point. $yaw_i$ may be directly obtained from the local map. It can be learned from Equation (18) that the quantity of candidate pose points is 2n+1, and n is an integer greater than or equal to 1. It can be learned from Equation (15) to Equation (17) that $H_{z-1}$ and $H_{z1}$ are the same as the location of the $0^{th}$ candidate pose point $H_{z0}$.

FIG. 9 is an example diagram of candidate pose points. In FIG. 9, a hollow origin indicates a candidate pose point $H_i$, a solid dot indicates the corrected location $H_{start}$, $L_5$ indicates a lane direction passing through the corrected location $H_{start}$, $L_0$ indicates the lane midline, XOY is the XY plane of the reference coordinate system, and O is the coordinate origin of the reference coordinate system. It can be learned from Equation (15) to Equation (18) and FIG. 9 that the candidate pose points are evenly distributed in the same lane direction of the local map, and the lane direction passes through the corrected location. In this way, a range of feature matching can be reduced to a line in map grid, and there is no need to cover all points around the location of the vehicle in the map. A calculation amount of projection imaging is significantly reduced, a range of point matching in feature matching is significantly reduced. It can be learned that a calculation amount is significantly reduced, and computing complexity is also significantly reduced.

In some implementations, if the attitude of the vehicle basically remains unchanged, the change of the attitude of the vehicle is not concerned, or the attitude of the vehicle does not need to be synchronously determined, attitude information ($raw_i$, $pitch_i$, $yaw_i$) of each candidate pose point may be the first attitude. For example, when the first attitude is ($raw_{start}$, $pitch_{start}$, $yaw_{start}$), attitude information of each candidate pose point is also the first attitude ($raw_{start}$, $pitch_{start}$, $yaw_{start}$). In other words, a pose of an $i^{th}$ candidate pose point may be $H_i(H_{xi}, H_{yi}, H_{zi}, raw_{start}, pitch_{start}, yaw_{start})$.

In some implementations, if the attitude of the vehicle needs to be synchronously determined, the attitude information of each candidate pose point may be determined in a manner similar to a manner of the location information $H_i(H_{xi}, H_{yi}, H_{zi})$. For example, the attitude information of each candidate pose point may be determined based on the first attitude ($raw_{start}$, $pitch_{start}$, $yaw_{start}$) in combination with a preset angular search step. It should be noted that the quantity of candidate pose points will not be limited to the above "2n+1" if the attitude of the vehicle needs to be synchronously determined.

When the second attitude of the vehicle is determined, the candidate pose points and the location information and the attitude information of each candidate pose point may be selected in a similar manner. Similarly, this can significantly reduce a calculation amount and significantly reduce computing complexity.

Step b3: Perform projection imaging.

In this step, for each candidate pose point, projection imaging may be performed by using the local map, to obtain a projected image of each candidate pose point.

In some implementations, a projection imaging process of a single candidate pose point may include: adjusting the external parameters of the first camera by using a pose of the candidate pose point, projecting pixels on a marker vector line of the local map to the pixel coordinate system of the first camera based on the external parameters and the internal parameters of the first camera, synchronously establishing a linear association relationship between the pixels in the pixel coordinate system based on a linear association relationship between the pixels in the local map, and rendering a corresponding pixel based on a preset pixel value of each marker, to obtain a projected image of the candidate pose point. In this way, the projected image may be equivalent to a road feature map of the front road image of the first camera with the optical center at the candidate pose point.

Herein, the marker includes but is not limited to all traffic signs and road markings such as traffic lights, underground parking garage columns, walls, toll booths, road gates, anti-collision strips, obstacles, storage locations, storage location lines, no-parking areas, pedestrian crossroads, deceleration belts, slow down, stop, yield lines, and yield, road sign plates, utility poles, road edges, trees, shrubs, median strips, guardrails, and the like.

In some implementations, according to the foregoing principles of Equation (1) to Equation (3), a process of projecting a pixel of a marker in the local map to the pixel coordinate system of the first camera may be implemented according to the following Equation (19):

$$Z_c \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} \begin{bmatrix} R & T \\ \vec{0} & 1 \end{bmatrix} \begin{bmatrix} X_W \\ Y_W \\ Z_W \\ 1 \end{bmatrix} \tag{19}$$

(u, v) indicates coordinate values of the pixel in the pixel coordinate system of the first camera, ($X_W$, $Y_W$, $Z_W$) indicates coordinate values of the pixel of the marker in the local map in the reference coordinate system, R is a rotation matrix of the first camera, T is a translation matrix of the first camera, R may be determined based on attitude information ($raw_i$, $pitch_i$, $yaw_i$) of a candidate pose point, and a rotation matrix in initial external parameters of the first camera, and T may be determined based on location information ($H_{xi}$, $H_{yi}$, $H_{zi}$) of the candidate pose point and a translation matrix in the initial external parameters of the first camera.

In some implementations, to facilitate feature matching, the preset pixel value of each marker in the projected image may be consistent with a preset pixel value of a corresponding marker in a road feature map.

Step b4: Obtain the second pose of the vehicle through feature matching.

In this step, feature matching is performed between a projected image of each candidate pose point and the road feature map to obtain a matching cost corresponding to the candidate pose point, and a pose of a candidate pose point with a smallest matching cost in all candidate pose points is selected as the second pose of the vehicle, that is, location information of the candidate pose point with the smallest matching cost is used as the second location of the vehicle, and attitude information of the candidate pose point with the smallest matching cost is used as the second attitude of the vehicle.

In some implementations, feature matching between the projected image of each candidate pose point and the road feature map may include: For each pixel p1 in the road feature map, a full projected image is traversed to find, in the projected image, a pixel p2 whose pixel value is closest to the pixel p1, and a Euclidean distance D1 between the pixel p2 in the projected image and the pixel p1 in the road feature map is calculated. In this way, a Euclidean distance D1 between each pixel in the road feature map and a corresponding pixel in a projected image is obtained. A sum of Euclidean distances D1 corresponding to all pixels in the road feature map is a matching cost (cost) of the projected image and the road feature map.

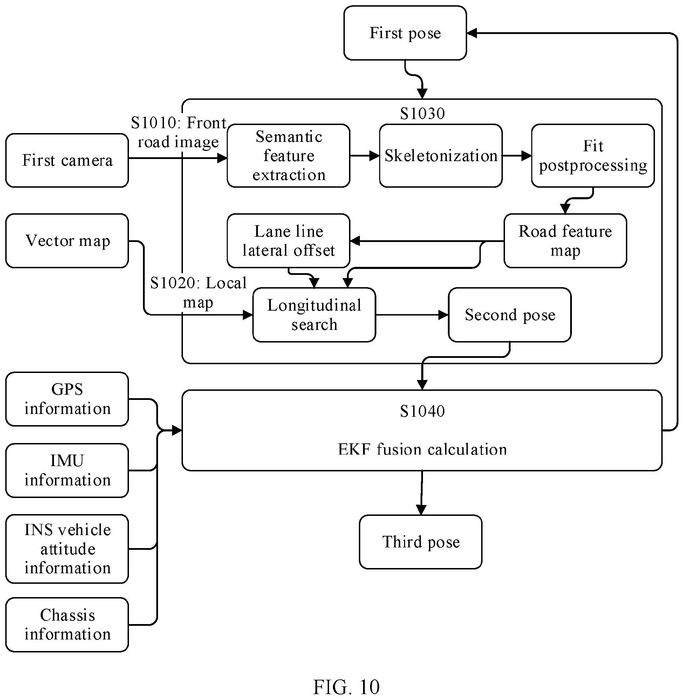

FIG. 10 is an example specific implementation procedure of a vehicle positioning method according to an embodiment of this application. Refer to FIG. 10. The example specific implementation process of the vehicle positioning method provided in embodiments of this application may include the following steps.

Step S1010: A first camera captures a front road image of a vehicle at a current moment, and provides the front road image to a computing device.

Step S1020: The computing device obtains a local map corresponding to a first pose, where the first pose is a global pose of the vehicle at a previous moment.

Step S1030: The computing device determines a second pose of the vehicle based on the front road image and the local map corresponding to the first pose.

Specifically, first, the road feature map of the front road image is obtained by performing processing such as semantic feature extraction, semantic feature skeletonization, and fit postprocessing; second, an ROI in the road feature map is extracted, and a lateral offset is determined based on a lane line feature in the ROI in the road feature map and the first pose; and third, a corrected location of the first location is obtained based on the lateral offset, and a longitudinal search is performed in a lane direction of the corrected location to obtain the second pose of the vehicle. Herein, the longitudinal search in the lane direction of the corrected location is the foregoing process of determining the second location of the vehicle. The process may include: selecting and determining poses of a plurality of candidate pose points in the lane direction of the corrected location, performing projection imaging of the local map on each candidate pose point to obtain a projected image of the candidate pose point, performing feature matching on the projected image of each candidate pose point and the road feature map to find a candidate pose point with a smallest matching cost, and using a pose of the candidate pose point with the smallest matching cost as the second pose of the vehicle.

Step S1040: Perform, by using an EKF module, fusion calculation on sensor positioning data at the current moment and the second pose obtained in step S1030, to obtain a third pose of the vehicle, where the third pose is a pose of the vehicle at the current moment. Herein, the sensor positioning data includes GPS information, IMU information, INS vehicle attitude information, and/or chassis information. An error range of vehicle positioning may be controlled at a centimeter level through fusion of a plurality of types of positioning information, thereby further improving precision of vehicle positioning.

In some embodiments, a weight of corresponding information may be adjusted in real time based on a status of each sensor in a fusion calculation process. For example, the GPS information carries a flag bit used to describe a GPS status and precision (for example, a GPS properly works, fails, has poor signal, or has another state), and whether to integrate the GPS information and an integration weight of the GPS information may be determined based on the flag bit in the GPS information. For example, when the GPS is faulty, a GPS sensor provides a flag bit indicating that the GPS information is unreliable, or does not output the GPS information. In this case, the GPS information may not be included in the fusion calculation in step S1040. In other words, fusion calculation is performed on the IMU information, the INS vehicle attitude information, and the chassis information at the current moment and the second pose obtained in step S1030, to obtain the third pose of the vehicle. When the GPS has good signal, in step S1040, fusion calculation may be performed on the GPS information, the IMU information, the INS vehicle attitude information, and the chassis information at the current moment and the second pose obtained in step S 1030, to obtain the third pose of the vehicle.

In some embodiments, the GPS information includes specific location information of the vehicle, and may be described by using longitude and latitude and altitude information or three-dimensional coordinate values in a reference coordinate system (for example, a UTM coordinate system). The IMU information may include but is not limited to a vehicle line acceleration and a vehicle angular acceleration. The INS vehicle attitude information includes vehicle attitude information obtained by resolving the IMU information. The chassis information may include but is not limited to a vehicle speed, a vehicle acceleration, a steering wheel angle, a steering wheel angular velocity, and other information. Specific content of the GPS information, the IMU information, the INS vehicle attitude information, and the chassis information is not limited in embodiments of this application.

In various cases where the GPS is proper, fails, has poor signal or otherwise, according to embodiments of this application, vehicle positioning with a centimeter-level positioning error can be implemented and computing resource consumption and time consumption can be reduced, thereby synchronously improving precision, reliability, and timeliness of vehicle positioning, and ensuring driving safety of a vehicle in a driving mode such as unmanned driving or intelligent driving.

The following describes in detail specific implementations of the vehicle positioning apparatus, the computing device, the vehicle, and the like provided in embodiments of this application.

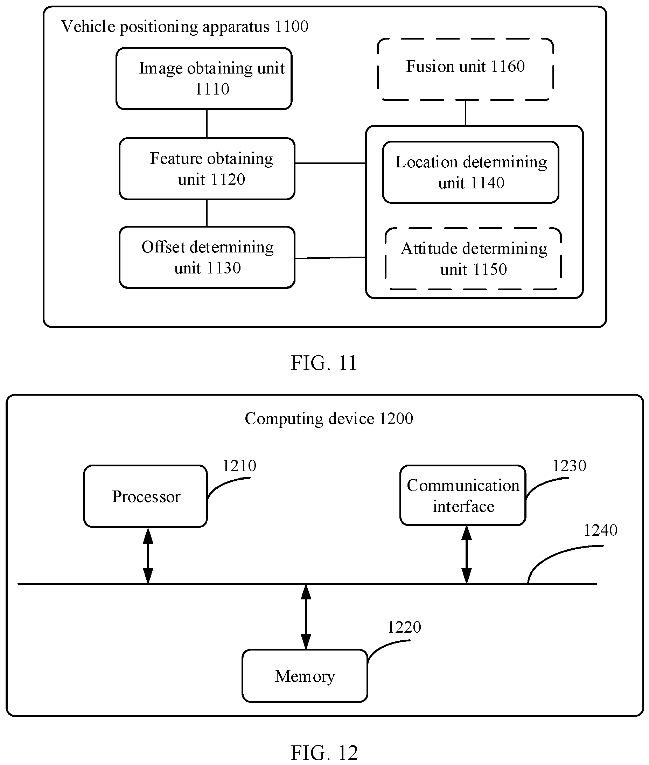

FIG. 11 is a schematic diagram of a structure of a vehicle positioning apparatus 1100 according to an embodiment of this application. Refer to FIG. 11. The vehicle positioning apparatus 1100 provided in this embodiment of this application may include:

an image obtaining unit 1110, configured to obtain a front road image of a vehicle;
a feature obtaining unit 1120, configured to obtain a road feature map based on the front road image;
an offset determining unit 1130, configured to determine a lateral offset of the vehicle based on the road feature map; and
a location determining unit 1140, configured to obtain a second location of the vehicle based on the lateral offset of the vehicle, a first pose of the vehicle, the road feature map, and a local map corresponding to the first pose.

In some embodiments, the feature obtaining unit 1120 may be specifically configured to determine the lateral offset of the vehicle based on a lane line feature in the road feature map.

In some embodiments, the lane line feature in the road feature map may include features of two lane lines in a region of interest ROI in the road feature map, and the two lane lines are located on left and right sides of the first pose.

In some embodiments, the feature obtaining unit 1120 may be specifically configured to obtain the lateral offset of the vehicle based on a lateral pixel offset and a preset pixel ratio, the lateral pixel offset is determined based on a lane line feature in a top view of the ROI in the road feature map, and the lane line feature in the top view of the ROI in the road feature map is obtained by using the features of the two lane lines in the ROI in the road feature map.

In some embodiments, the lateral pixel offset is a distance between an ROI mapping point of an optical center of a first camera in the top view and a lane central point, and the lane central point is a lane central point between the lane lines on the left and right sides of the first pose.

In some embodiments, the vehicle positioning apparatus 1100 may further include an attitude determining unit 1150, configured to obtain a second attitude of the vehicle based on the lateral offset of the vehicle, the first pose, the road feature map, and the local map.

In some embodiments, the second location or the second attitude of the vehicle or both are determined based on a plurality of candidate pose points in the local map, and a pose of each candidate pose point is determined based on the lateral offset of the vehicle, the first pose, and the local map.

In some embodiments, the plurality of candidate pose points are evenly distributed in a same lane direction of the local map by using a corrected location as a center, and the corrected location is obtained based on the lateral offset and based on a lane central point location and a road orientation angle that are corresponding to the first pose and that are in the local map.

In some embodiments, the second location is location information of one candidate pose point selected by performing feature matching on a projected image and the road feature map; and/or the second attitude is attitude information of the candidate pose point selected by performing feature matching on the projected image and the road feature map; and the projected image is obtained based on a pose of the candidate pose point, internal and external parameters of the first camera, and the local map.

In some embodiments, the vehicle positioning apparatus 1100 may further include a fusion unit 1160, configured to: obtain a third pose of the vehicle based on the second location, a first attitude of the vehicle, and sensor positioning data; or obtain a third pose of the vehicle based on the second location, the second attitude of the vehicle, and sensor positioning data. Herein, the sensor positioning data may include one or more of the following: GPS information, IMU information, INS vehicle attitude information, and chassis information.

In some embodiments, the local map may be from a vector map.

The vehicle positioning apparatus in embodiments of this application may be implemented by using software, hardware, or a combination thereof. For example, the vehicle positioning apparatus 1100 may be implemented as software (the software has the foregoing functional modules) in a computing device, or may be directly implemented as a computing device with the foregoing functional modules.

FIG. 12 is a schematic diagram of a structure of a computing device 1200 according to an embodiment of this application. The computing device 1200 includes one or more processors 1210 and one or more memories 1220.

The processor 1210 may be connected to the memory 1220. The memory 1220 may be configured to store program code and data. Therefore, the memory 1220 may be a storage unit in the processor 1210, an external storage unit independent of the processor 1210, or a component including the storage unit in the processor 1210 and the external storage unit independent of the processor 1210.

Optionally, the computing device 1200 may further include a communication interface 1230. It should be understood that the communication interface 1230 in the computing device 1200 shown in FIG. 12 may be used for communication with another device.

Optionally, the computing device 1200 may further include a bus 1240. The memory 1220 and the communication interface 1230 may be connected to the processor 1210 through the bus 1240. The bus 1240 may be a peripheral component interconnect (Peripheral Component Interconnect, PCI) bus, an extended industry standard architecture (Extended Industry Standard Architecture, EISA) bus, or the like. The bus 1240 may be classified into an address bus, a data bus, a control bus, and the like. For ease of representation, the bus is indicated by using only one line in FIG. 12. However, it does not indicate that there is only one bus or only one type of bus.

It should be understood that in this embodiment of this application, the processor 1210 may be a central processing unit (central processing unit, CPU). The processor may alternatively be a general-purpose processor, a digital signal processor (digital signal processor, DSP), an application-specific integrated circuit (application-specific integrated circuit, ASIC), a field programmable gate array (field programmable gate Array, FPGA) or another programmable logic device, a discrete gate or transistor logic device, or a discrete hardware component. The general-purpose processor may be a microprocessor, or the processor may be any conventional processor or the like. Alternatively, the processor 1210 may be one or more integrated circuits, and is configured to execute a related program, to implement the technical solutions provided in embodiments of this application.

The memory 1220 may include a read-only memory and a random access memory, and provide instructions and data for the processor 1210. A part of the processor 1210 may further include a non-volatile random access memory. For example, the processor 1210 may further store device type information.

When the computing device 1200 runs, the processor 1210 executes computer-executable instructions in the memory 1220 to perform the operation steps of the foregoing vehicle positioning method.

It should be understood that the computing device 1200 according to this embodiment of this application may correspond to a corresponding execution body of the method according to embodiments of this application, and the foregoing and other operations and/or functions of modules in the computing device 1200 are separately intended to implement corresponding procedures of the methods in embodiments. For brevity, details are not described herein again.

During actual application, the computing device 1200 may be implemented as a functional unit in a chip, an independent chip, a functional unit of a vehicle-mounted terminal device, or an independent vehicle-mounted terminal device. In some embodiments, the computing device 1200 may be a functional unit/module in an in-vehicle infotainment, a cockpit domain controller (cockpit domain controller, CDC), or a mobile data center/multi-domain controller (Mobile Data Center/Multi-Domain Controller, MDC). A form and a deployment manner of the computing device 1200 are not limited in embodiments of this application.

An embodiment of this application further provides a vehicle. The vehicle includes a first camera (which may also be referred to as a front-view camera) configured to capture a front road image of the vehicle. The vehicle may further include a vehicle positioning apparatus 1100, a computing device 1200, a computer-readable storage medium described below, or a computer program product described below.

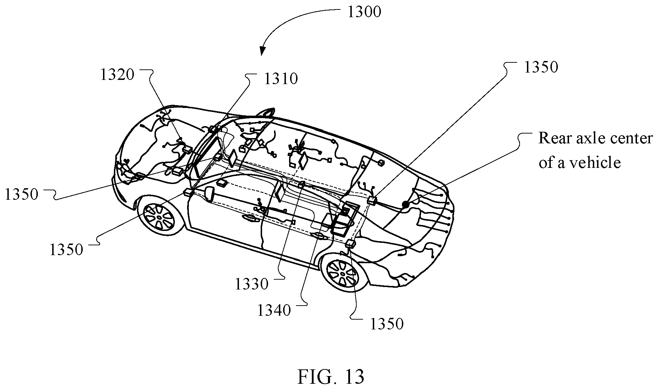

FIG. 13 is an example diagram of a vehicle according to an embodiment of this application. Refer to FIG. 13. A front-view camera 1310 (that is, the foregoing first camera) is installed in the vehicle 1300. The front-view camera may capture the front road image of the vehicle in real time and transmit the front road image to the computing device 1200 (not shown in the figure) of the vehicle, so that the computing device 1200 reliably positions the vehicle in real time by using the front road image.

For example, a GPS sensor 1320, an IMU 1330, a vehicle speed sensor 1340, an acceleration sensor 1350, and the like are further installed on the vehicle, and these sensors are separately connected to the foregoing computing device. It should be noted that FIG. 10 is merely an example. During specific application, quantities, types, deployment locations, installation manners, and the like of the GPS sensor 1320, the IMU 1330, the vehicle speed sensor 1340, and the acceleration sensor 1350 are not limited in embodiments of this application.

For example, the front-view camera 1310, the GPS sensor 1320, the IMU 1330, the vehicle speed sensor 1340, and the acceleration sensor 1350 may be separately connected to the computing device in a wireless or wired manner. For example, the front-view camera, the GPS, the IMU, the vehicle speed sensor, and the acceleration sensor may be connected to the computing device through Ethernet, Bluetooth (Bluetooth), a wireless fidelity (wireless fidelity, Wi-Fi) network, a cellular network, a controller area network (Controller Area Network, CAN) bus, and a local interconnect network (local interconnect network, LIN) bus or in various other communication manners.

An embodiment of this application further provides a computer-readable storage medium. The computer-readable storage medium stores a computer program. When the program is run by a processor, the processor is enabled to perform the foregoing vehicle positioning method. The computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (non-exhaustive list) of the computer-readable storage medium include: an electrical connection with one or more wires, a portable computer disk, a hard disk, a random access memory, a read-only memory, an erasable programmable read-only memory, an optical fiber, a portable compact disk read-only memory, an optical storage device, a magnetic storage device, or any appropriate combination thereof.

An embodiment of this application further provides a computer program product, including a computer program. When the computer program is run by a processor, the processor is enabled to perform the foregoing vehicle positioning method. Herein, a program design language of the computer program product may be one or more. The program design language may include but is not limited to object-oriented program design languages such as Java or C++, and conventional procedural program design languages such as a "C" language.

It should be noted that the foregoing are merely example embodiments of this application and used technical principles. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

## Claims

1. A vehicle positioning method, comprising:

   obtaining a front road image of a vehicle;
   obtaining a road feature map based on the front road image;
   determining a lateral offset of the vehicle based on the road feature map; and
   obtaining a second location of the vehicle based on the lateral offset of the vehicle, a first pose of the vehicle, the road feature map, and a local map corresponding to the first pose.

2. The method according to claim 1, wherein the determining a lateral offset of the vehicle based on the road feature map comprises: determining the lateral offset of the vehicle based on a lane line feature in the road feature map.

3. The method according to claim 2, wherein the lane line feature in the road feature map comprises features of two lane lines in a region of interest ROI in the road feature map, and the two lane lines are located on left and right sides of the first pose.

4. The method according to claim 3, wherein the determining the lateral offset of the vehicle based on a lane line feature in the road feature map comprises: obtaining the lateral offset of the vehicle based on a lateral pixel offset and a preset pixel ratio, and determining the lateral pixel offset based on a lane line feature in a top view of the ROI in the road feature map, wherein the lane line feature in the top view of the ROI in the road feature map is obtained by using the features of the two lane lines in the ROI in the road feature map.

5. The method according to claim 4, wherein the lateral pixel offset is a distance between an ROI mapping point of an optical center of a first camera in the top view and a lane central point, the lane central point is a lane central point between the lane lines on the left and right sides of the first pose, and the first camera is a camera that captures the front road image.

6. The method according to any one of claims 1 to 5, wherein the method further comprises: obtaining a second attitude of the vehicle based on the lateral offset of the vehicle, the first pose, the road feature map, and the local map.

7. The method according to any one of claims 1 to 6, wherein the second location or the second attitude of the vehicle or both are determined based on a plurality of candidate pose points in the local map, and a pose of each candidate pose point is determined based on the lateral offset of the vehicle, the first pose, and the local map.

8. The method according to claim 7, wherein the plurality of candidate pose points are evenly distributed in a same lane direction of the local map by using a corrected location as a center, and the corrected location is obtained based on the lateral offset of the vehicle and based on a lane central point location and a road orientation angle that are corresponding to the first pose and that are in the local map.

9. The method according to claim 7 or 8, wherein

   the second location is location information of one candidate pose point selected by performing feature matching on a projected image and the road feature map; and/or the second attitude is attitude information of the candidate pose point selected by performing feature matching on the projected image and the road feature map; and the projected image is obtained based on a pose of the candidate pose point, internal and external parameters of the first camera, and the local map.

10. The method according to any one of claims 1 to 9, wherein the method further comprises:
    obtaining a third pose of the vehicle based on the second location, a first attitude of the vehicle, and sensor positioning data; or obtaining a third pose of the vehicle based on the second location, the second attitude of the vehicle, and sensor positioning data.

11. The method according to claim 10, wherein the sensor positioning data comprises one or more of the following: GPS information, IMU information, INS vehicle attitude information, and chassis information.

12. The method according to any one of claims 1 to 11, wherein the local map is from a vector map.

13. A vehicle positioning apparatus, comprising:

    an image obtaining unit, configured to obtain a front road image of a vehicle;
    a feature obtaining unit, configured to obtain a road feature map based on the front road image;
    an offset determining unit, configured to determine a lateral offset of the vehicle based on the road feature map; and
    a location determining unit, configured to obtain a second location of the vehicle based on the lateral offset of the vehicle, a first pose of the vehicle, the road feature map, and a local map corresponding to the first pose.

14. The apparatus according to claim 13, wherein the feature obtaining unit is specifically configured to determine the lateral offset of the vehicle based on a lane line feature in the road feature map.

15. The apparatus according to claim 14, wherein the lane line feature in the road feature map comprises features of two lane lines in a region of interest ROI in the road feature map, and the two lane lines are located on left and right sides of the first pose.

16. The apparatus according to claim 15, wherein the feature obtaining unit is specifically configured to obtain the lateral offset of the vehicle based on a lateral pixel offset and a preset pixel ratio, the lateral pixel offset is determined based on a lane line feature in a top view of the ROI in the road feature map, and the lane line feature in the top view of the ROI in the road feature map is obtained by using the features of the two lane lines in the ROI in the road feature map.

17. The apparatus according to claim 16, wherein the lateral pixel offset is a distance between an ROI mapping point of an optical center of a first camera in the top view and a lane central point, the lane central point is a lane central point between the lane lines on the left and right sides of the first pose, and the first camera is a camera that captures the front road image.

18. The apparatus according to any one of claims 13 to 17, wherein the apparatus further comprises an attitude determining unit, configured to obtain a second attitude of the vehicle based on the lateral offset of the vehicle, the first pose, the road feature map, and the local map.

19. The apparatus according to any one of claims 13 to 18, wherein the second location or the second attitude of the vehicle or both are determined based on a plurality of candidate pose points in the local map, and a pose of each candidate pose point is determined based on the lateral offset of the vehicle, the first pose, and the local map.

20. The apparatus according to claim 19, wherein the plurality of candidate pose points are evenly distributed in a same lane direction of the local map by using a corrected location as a center, and the corrected location is obtained based on the lateral offset of the vehicle and based on a lane central point location and a road orientation angle that are corresponding to the first pose and that are in the local map.

21. The apparatus according to claim 19 or 20, wherein

the second location is location information of one candidate pose point selected by performing feature matching on a projected image and the road feature map; and/or the second attitude is attitude information of the candidate pose point selected by performing feature matching on the projected image and the road feature map; and the projected image is obtained based on a pose of the candidate pose point, internal and external parameters of the first camera, and the local map.

22. The apparatus according to any one of claims 13 to 21, wherein the apparatus further comprises:
a fusion unit, configured to: obtain a third pose of the vehicle based on the second location, a first attitude of the vehicle, and sensor positioning data; or obtain a third pose of the vehicle based on the second location, the second attitude of the vehicle, and sensor positioning data.

23. The apparatus according to claim 22, wherein the sensor positioning data comprises one or more of the following: GPS information, IMU information, INS vehicle attitude information, and chassis information.

24. The apparatus according to any one of claims 13 to 23, wherein the local map is from a vector map.

25. A computing device, comprising a processor and a memory, wherein the memory stores program instructions, and when the program instructions are executed by the processor, the processor is enabled to perform the method according to any one of claims 1 to 12.

26. A computer-readable storage medium, wherein the computer-readable storage medium stores program instructions, and when the program instructions are executed by a computer, the computer is enabled to perform the method according to any one of claims 1 to 12.

27. A vehicle, comprising:

a first camera, configured to capture a front road image; and
the vehicle positioning apparatus according to any one of claims 13 to 24 or the computing device according to claim 25.

28. The vehicle according to claim 27, wherein the vehicle further comprises one or more of the following: a GPS sensor, an IMU, a vehicle speed sensor, and an acceleration sensor.

FIG. 1

S210

Obtain a front road image of a vehicle

S220

Obtain a road feature map based on the front road image

S230

Determine a lateral offset of the vehicle based on the road feature map

S240

Obtain a second location of the vehicle based on the lateral offset of the vehicle, a first pose of the vehicle, the road feature map, and a local map corresponding to the first pose

S250

Obtain a third pose of the vehicle

FIG. 2

FIG. 3

FIG. 4

FIG. 5

FIG. 6

Top view of an
ROI in a road
feature map

FIG. 7

Lane midline

Lane cross-
sectional line

Lane line

$C_{start}$   $E_{start}$   $H_{start}$

Lane
line

Y

$Offset_2$

$yaw_1$

O   X

FIG. 8

Y

O   X

$L_5$   $L_0$

$H_i$   $H_{start}$

Rear axle
center of a
vehicle

FIG. 9

FIG. 10

Vehicle positioning apparatus 1100

Image obtaining unit 1110

Feature obtaining unit 1120

Offset determining unit 1130

Fusion unit 1160

Location determining unit 1140

Attitude determining unit 1150

FIG. 11

Computing device 1200

Processor

1210

Communication interface

1230

1240

1220

Memory

FIG. 12

FIG. 13

## INTERNATIONAL SEARCH REPORT

| International application No. |
| --- |
| **PCT/CN2021/125857** |

**A. CLASSIFICATION OF SUBJECT MATTER**

G01C 21/30(2006.01)i

According to International Patent Classification (IPC) or to both national classification and IPC

**B. FIELDS SEARCHED**

Minimum documentation searched (classification system followed by classification symbols)

G01C21/+

Documentation searched other than minimum documentation to the extent that such documents are included in the fields searched

Electronic data base consulted during the international search (name of data base and, where practicable, search terms used)

CNTXT, ENTXT, ENTXTC, VEN, 百度学术, BAIDU SCHOLAR: 车辆, 定位, 位置, 位姿, 姿态, 道路, 特征, 横向, 偏差, 偏移, 地图, 局部, 车道线, vehicle, driving, position+, pose, character, map, road, lane, local

**C. DOCUMENTS CONSIDERED TO BE RELEVANT**

| Category* | Citation of document, with indication, where appropriate, of the relevant passages | Relevant to claim No. |
| --- | --- | --- |
| X | CN 109405824 A (WUHAN QIYOU TECHNOLOGY CO., LTD.) 01 March 2019 (2019-03-01) description, paragraphs [0050]-[0090] and [0152]-[0155], and figures 1-2 | 1-28 |
| X | CN 112902987 A (BEIJING SANKUAI ONLINE TECHNOLOGY CO., LTD.) 04 June 2021 (2021-06-04) description, paragraphs [0047]-[0064] | 1-28 |
| A | CN 109849922 A (QINGDAO ZHONGQI SPECIAL AUTOMOBILE CO., LTD.) 07 June 2019 (2019-06-07) entire document | 1-28 |
| A | EP 3113152 A1 (MAGNETI MARELLI SPA) 04 January 2017 (2017-01-04) entire document | 1-28 |
| A | CN 111272180 A (HERE GLOBAL BV) 12 June 2020 (2020-06-12) entire document | 1-28 |
| A | CN 102529975 A (GM GLOBAL TECHNOLOGY OPERATIONS LLC.) 04 July 2012 (2012-07-04) entire document | 1-28 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 June 2022** | **28 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/125857**

| Patent document cited in search report | | | Publication date (day/month/year) | Patent family member(s) | | | Publication date (day/month/year) |
|---|---|---|---|---|---|---|---|
| CN | 109405824 | A | 01 March 2019 | None | | | |
| CN | 112902987 | A | 04 June 2021 | None | | | |
| CN | 109849922 | A | 07 June 2019 | None | | | |
| EP | 3113152 | A1 | 04 January 2017 | IT | UB20151802 | A1 | 01 January 2017 |
| | | | | US | 2017001564 | A1 | 05 January 2017 |
| CN | 111272180 | A | 12 June 2020 | EP | 3663718 | A1 | 10 June 2020 |
| | | | | US | 2020174487 | A1 | 04 June 2020 |
| CN | 102529975 | A | 04 July 2012 | DE | 102011120497 | A1 | 14 June 2012 |
| | | | | US | 2012150437 | A1 | 14 June 2012 |

Form PCT/ISA/210 (patent family annex) (January 2015)